(19) Europäisches Patentamt
European Patent Office
Office européen des brevets

(11) **EP 1 806 861 A1**

(12) **EUROPEAN PATENT APPLICATION**
published in accordance with Art. 158(3) EPC

(43) Date of publication:
**11.07.2007 Bulletin 2007/28**

(51) Int Cl.:
***H04J 11/00*** *(2006.01)* ***H04Q 7/34*** *(2006.01)*

(21) Application number: **05816863.4**

(22) Date of filing: **15.12.2005**

(86) International application number:
**PCT/JP2005/023029**

(87) International publication number:
**WO 2006/068023 (29.06.2006 Gazette 2006/26)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.12.2004 JP 2004371745**

(71) Applicant: **MATSUSHITA ELECTRIC INDUSTRIAL CO., LTD**
**Kadoma-shi, Osaka 571-8501 (JP)**

(72) Inventor: **YOSHII, Isamu,**
**Matsushita Electric Industrial Co.,Ltd.**
**Osaka 571-8501 (JP)**

(74) Representative: **Grünecker, Kinkeldey,**
**Stockmair & Schwanhäusser**
**Anwaltssozietät**
**Maximilianstrasse 58**
**80538 München (DE)**

(54) **WIRELESS COMMUNICATION METHOD, COMMUNICATION TERMINAL APPARATUS, AND WIRELESS COMMUNICATION SYSTEM**

(57)    A communication terminal apparatus and the like wherein even under an environment that the propagation path characteristic is different for each of frequency bands of OFDM signals, the error rates of all the frequency bands are reduced to improve the communication rate. In this apparatus, a connection destination deciding part (221) compares the correlation values of the respective sub-bands for cells (A-D) received from correlation value calculating parts (213-1,213-2,213-3) to determine a sub-band ID that exhibits the highest correlation value in each sub-band. Then, a base station apparatus (100) corresponding to the determined sub-band ID is decided as a connection destination in that sub-band, and the thus decided base station apparatus (100) for each sub-band is notified to an access request signal generating part (222) and to a received data generating part (231).

FIG.5

**EP 1 806 861 A1**

**Description**

Technical Field

The present invention relates to a communication terminal apparatus, or the like, that simultaneously performs radio communication with a plurality of base station apparatuses using an orthogonal frequency division multiplexing (OFDM) scheme.

Background Art

Conventionally, a method is proposed whereby a communication terminal apparatus applying an OFDM scheme receives a common pilot signal transmitted from a plurality of base station apparatuses, and determines the base station apparatus to be connected from the plurality of base station apparatuses using the received common pilot signal (CPICH) (see Non-Patent Document 1, for example).

In the method disclosed in Non-Patent Document 1, unique code sequences are assigned to base station apparatuses, and the base station apparatuses arrange the assigned code sequences over the entire frequency band of orthogonal frequency division multiplexing (OFDM) signals to generate common pilot signals and transmit the generated common pilot signals to a communication terminal apparatus such as a mobile telephone using CPICH. Then, upon reception of these common pilot signals transmitted from a plurality of base station apparatuses, the communication terminal apparatus calculates correlation values between these common pilot signals and the code sequences assigned to the base station apparatuses, and determines as a connecting destination the base station apparatus that transmits the common pilot signal having the largest correlation value out of the calculated values. The communication terminal apparatus transmits an access request signal to the determined base station apparatus using a random access channel (RACH), and starts radio communication using an OFDM scheme.

That is, in the method disclosed in Non-Patent Document 1, the communication terminal apparatus selects the base station apparatus that transmits the common pilot signal having the largest total reception power over the entire frequency band, and performs radio communication with only the selected one base station apparatus. Then, according to the method disclosed in Non-Patent Document 1, the communication terminal apparatus selects the base station apparatus that transmits the common pilot signal having the largest correlation value and starts communication, and it is thereby possible to decrease the error rate of transmission/reception signals and improve the communication rate. Non-Patent Document 1: Motohiro Tanno, Hiroyuki Atarashi, Kenichi Higuchi, Mamoru Sawahashi, "Characteristics of Three-Stage High-Speed Cell Search Method Based on Common Pilot Channel in Reverse Link Broadband OFCDM," July 2002, Technical Report of the Institute of Electronics Information and Communication Engineers of Japan, RCS2002-135

Disclosure of the Invention

Problems to be Solved by the Invention

However, the method disclosed in Non-Patent Document 1 assumes that the communication terminal apparatus communicates with one base station apparatus, and therefore, even when the communication terminal apparatus communicates with the base station apparatus that transmits the common pilot signal having the largest total reception power over the entire frequency band, there is a problem that the reception power varies for each frequency band, and the error rate of transmission/reception signals conversely further increases in the frequency band where the reception power is low.

It is therefore an object of the present invention to provide a communication terminal apparatus, or the like, that decreases the error rate of the entire frequency band and improves a communication rate even under an environment where propagation path characteristics differ for each frequency band of an OFDM signal.

Means for Solving the Problem

The radio communication method according to the present invention is a method that simultaneously receives OFDM signals at a communication terminal apparatus from a plurality of base station apparatuses, and includes: a reception step of receiving pilot signals transmitted from the base station apparatuses at the communication terminal apparatus; a measurement step of measuring for each subband a reception quality of each received pilot signal at the communication terminal apparatus; a determination step of determining for each subband a base station apparatus that transmits a pilot signal having the best reception quality measurement result; and an access request step of transmitting to the base station apparatus determined for each subband an access request signal that requests communication start at the subband relating to the determination.

Advantageous Effect of the Invention

According to the present invention, in a radio communication system using an OFDM scheme, the communication terminal apparatus measures for each subband the reception quality of pilot signals transmitted from a plurality of base station apparatuses, and determines according to the measurement results the base station apparatus that transmits the pilot signal having the best reception quality for each subband as the connecting destination of that subband, and therefore an OFDM signal is transmitted from the base station apparatus having the best propagation path state for each subband, so that it is possible to reduce the error rate of the entire frequency band of the OFDM signal. Thus, according to the present invention, it is possible to effectively improve the throughput of a radio communication system including this communication terminal apparatus and a plurality of base station apparatuses.

Brief Description of Drawings

FIG. 1 shows a configuration of a radio communication system according to Embodiment 1 of the present invention;
FIG.2 shows a configuration of a pilot signal of cell A according to Embodiment 1 of the present invention;
FIG.3 shows a frame configuration of an OFDM signal of cell A according to Embodiment 1 of the present invention;
FIG.4 is a block diagram showing the main configuration of a base station apparatus according to Embodiment 1 of the present invention;
FIG.5 is a block diagram showing the main configuration of a communication terminal apparatus according to Embodiment 1 of the present invention;
FIG.6 is a flowchart illustrating a radio communication method according to Embodiment 1 of the present invention;
FIG.7 shows an example of FFT timings according to Embodiment 1 of the present invention;
FIG.8 shows an example of the reception quality per subcarrier of a pilot signal according to Embodiment 1 of the present invention;
FIG.9 shows a configuration of a pilot signal of cell A according to Embodiment 2 of the present invention;
FIG.10 is a block diagram showing the main configuration of a base station apparatus according to Embodiment 2 of the present invention;
FIG.11 is a block diagram showing the main configuration of a communication terminal apparatus according to Embodiment 2 of the present invention;
FIG.12 is a flowchart illustrating a radio communication method according to Embodiment 2 of the present invention; and
FIG.13 shows a frame configuration of an OFDM signal of a modified example of Embodiment 2 of the present invention.

Best Mode for Carrying Out the Invention

Now embodiments of the present invention will be described in detail with reference to the accompanying drawings.

(Embodiment 1)

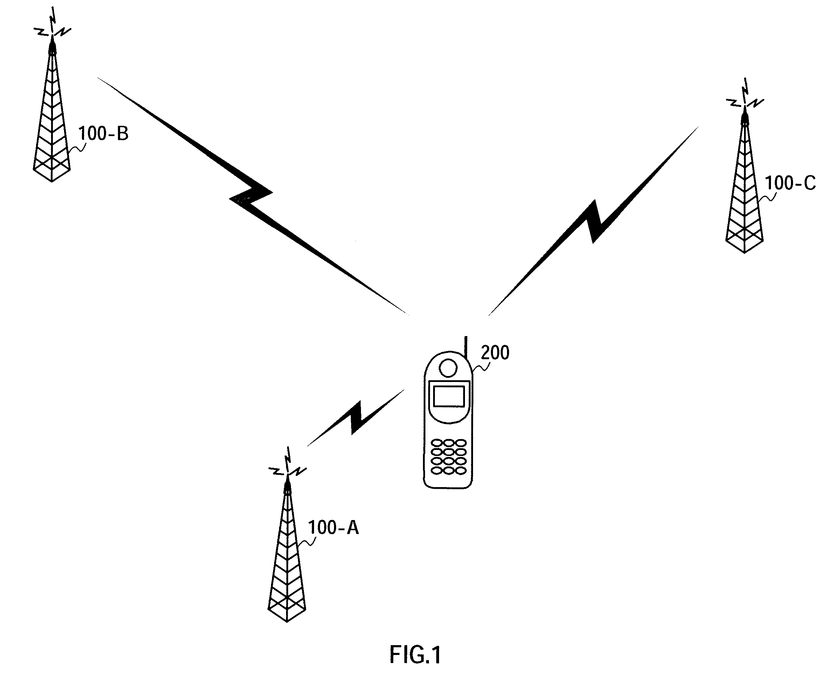

FIG. 1 is a pattern diagram showing the configuration of a radio communication system using an orthogonal frequency and code division multiplexing (OFCDM) /frequency division duplex (FDD) scheme according to Embodiment 1 of the present invention. The radio communication system according to this embodiment has base station apparatuses 100-A, 100-B and 100-C, and communication terminal apparatus 200. As shown in FIG. 1, communication terminal apparatus 200 is located at a point that varies in distance from base station apparatuses 100-A, 100-B and 100-C. Furthermore, base station apparatus 100-A is abase station of "cell A, " and similarly base station apparatus 100-B is a base station of "cell B," and base station apparatus 100-C is a base station of "cell C."

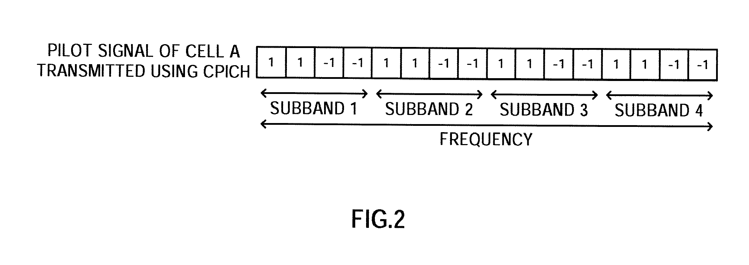

FIG.2 shows the configuration of the pilot signal of cell A transmitted using CPICH from base station apparatus 100-A of this embodiment. As shown in FIG.2, in this embodiment, the pilot signal is transmitted as one symbol of an OFDM signal comprised of 16 subcarriers. Further, one subband is comprised of four adjacent subcarriers of the pilot signal. In this embodiment, the same orthogonal code sequence is assigned to subbands 1 to 4 of one pilot signal. Specifically, the pilot signal of cell A, as shown in FIG.2, has a configuration wherein the same orthogonal code sequence "11-1-1" is assigned to subbands 1 to 4.

Furthermore, in this embodiment, the orthogonal code sequences of subbands 1 to 4 are each referred to as a "subband ID," and the configuration wherein the subband ID is repeated four times, that is the configuration of the pilot signal, is referred to as the "cell ID. " Further, in this embodiment, the OFDM signal that includes the pilot signal is modulated using the binaryphase shift keying (BPSK) scheme on a per subcarrier basis in base station apparatus 100 and is radio transmitted using CPICH.

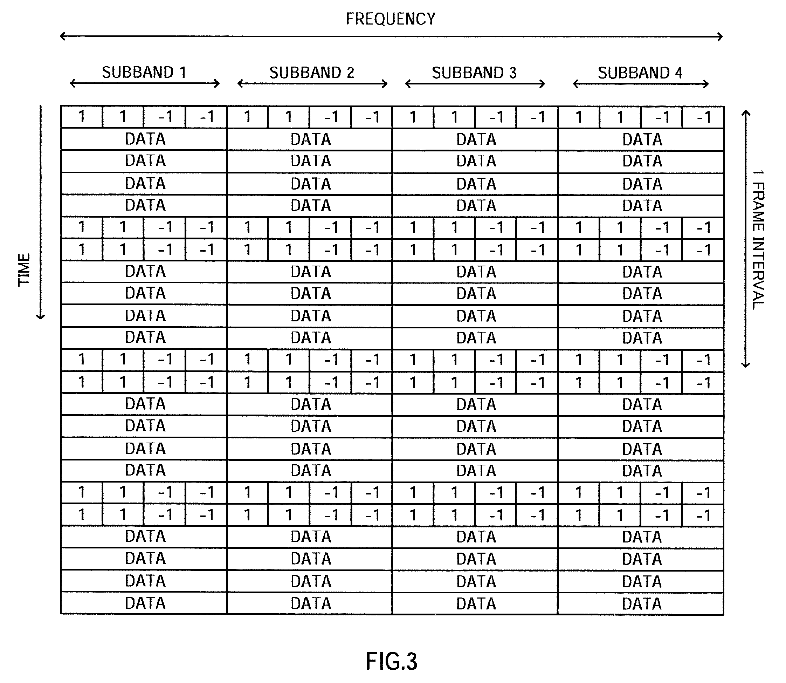

FIG.3 shows the frame configuration of the OFDM signal of this embodiment. In this embodiment, as shown in FIG.3, the OFDM signal has a configuration that time multiplexes the pilot signal and data signal, and one frame thereof has a configuration that repeats one unit twice where one symbol of a pilot signal is arranged before and after the data signal of four symbols.

Here, "Table 1" below shows the subband IDs and cell IDs of cell A, cell B, cell C and cell D (not shown) of this embodiment. Furthermore, in this embodiment, the subband ID consists of a Walsh-Hadamard code, and is an orthogonal code sequence of 4 bits, and therefore four types exist. Furthermore, the frame configurations of cells B to D are the same as that shown in FIG.3.

Table 1

| Cell | Subband ID | Cell ID |
|------|-----------|---------|
| A | 11-1-1 | 11-1-1 11-1-1 11-1-1 11-1-1 |
| B | 1-11-1 | 1-11-1 1-11-1 1-11-1 1-11-1 |
| C | 1111 | 1111 1111 1111 1111 |
| D | -111-1 | -111-1 -111-1 -111-1 -111-1 |

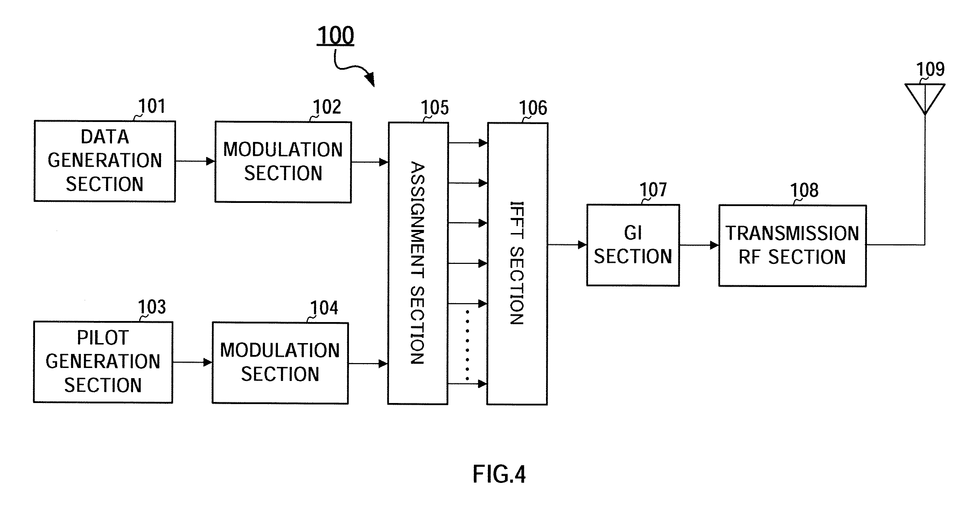

FIG.4 is a block diagram showing the main configuration of base station apparatus 100 according to this embodiment. Base station apparatus 100 has data generation section 101, modulation sections 102 and 104, pilot generation section 103, assignment section 105, inverse fast Fourier Transform (IFFT) section 106, guard interval (GI) section 107, transmission RF section 108 and antenna element 109. Furthermore, base station apparatuses 100-A, 100-B and 100-C have the same configuration and are indicated collectively as base station apparatus 100.

Data generation section 101 generates transmission data such as audio data and image data, and inputs the generated transmission data to modulation section 102.

Modulation section 102 modulates the transmission data inputted from data generation section 101 using a BPSK scheme, and inputs the modulated transmission data to assignment section 105.

Pilot generation section 103 generates a pilot signal having a unique cell ID assigned to base station apparatus 100, and inputs the generated pilot signal to modulation section 104.

Modulation section 104 modulates the pilot signal inputted from pilot generation section 103 using a BPSK scheme, and inputs the modulated pilot signal to assignment section 105.

Assignment section 105 includes a serial/parallel converter, converts the transmission data inputted from modulation section 102 and the pilot signal transmitted from modulation section 104 to parallel signals, and time division multiplexes these parallel signals so that the frame configuration becomes that shown in FIG.3. Then, assignment section 105 inputs the time multiplexed parallel signals to IFFT section 106.

IFFT section 106 performs IFFT processing on the parallel signals inputted from assignment section 105, generates an OFDM signal by converting the IFFT processed parallel signals to serial signals, and inputs generated OFDM signal to GI section 107.

GI section 107 inserts a guard interval in the OFDM signal inputted from IFFT section 106, and inputs the OFDM signal after guard interval insertion to transmission RF section 108.

Transmission RF section 108 has a frequency converter, low noise amplifier, or the like, performs predetermined transmission processing on the OFDM signal inputted from GI section 107, and radio transmits the OFDM signal after transmission processing to communication terminal apparatus 200 via antenna element 109. Furthermore, in this embodiment, the OFDM signal is transmitted frombase station apparatuses 100-A, 100-B and 100-C at the same output power.

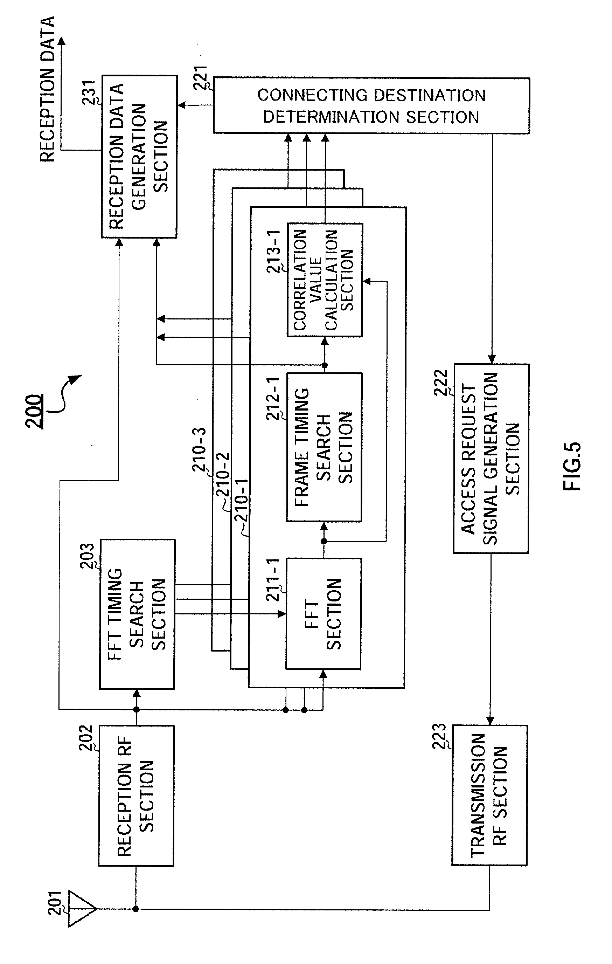

FIG.5 is a block diagram showing the main configuration of communication terminal apparatus 200 according to this embodiment. Communication terminal apparatus 200 has antenna element 201, reception RF section 202, fast Fourier Transform (FFT) timing search section 203, channel determination sections 210-1, 210-2 and 210-3, connecting destination determination section 221, access request signal generation section 222, transmission RF section 223 and reception data generation section 231.

Channel determination sections 210-1, 210-2 and 210-3 each have FFT section 211, frame timing search section 212 and correlation value calculation section 213. Furthermore, in this embodiment, the branch numbers of channel determination sections 210-1, 210-2 and 210-3 and components thereof are omitted when the functions and operation are described as a whole.

Reception RF section 202 receives the OFDM signals radio transmitted from base station apparatuses 100-A, 100-B and 100-C via antenna element 201, performs predetermined reception processing on the three received OFDM signals, and inputs the three OFDM signals after reception processing to FFT timing search section 203, FFT section 211 and reception data generation section 231.

FFT timing search section 203 searches for the start timing of FFT processing--FFT timing--using the guard interval inserted in the three OFDM signals inputted from reception RF section 202.

Specifically, FFT timing search section 203 has a delay device that delays the OFDM signals inputted from reception RF section 202 by one frame, monitors the correlation values between the outputs from the delay device and the OFDM signals inputted from reception RF section 202, and determines the timing at which the peak appears in the correlation values as an FFT timing.

Here, in this embodiment, communication terminal apparatus 200 performs simultaneous communication with base station apparatuses 100-A, 100-B and 100-C, and FFT timing search section 203 determines the timing of the top three peaks of the correlation values of one frame as FFT timings. Then, with regard to the determination result, FFT timing search section 203 reports FFT timing #1 having the largest correlation value to FFT section 211-1, and similarly reports FFT timing #2 having the second largest correlation value to FFT section 211-2 and FFT timing #3 having the third largest correlation value to FFT section 211-3.

Although FFT timing search section 203 detects FFT timings #1 to #3, the individual correspondence relationships between the detected FFT timings #1 to #3 and cells A to C remain unknown.

FFT section 211 removes the guard intervals of the OFDM signals inputted from reception RF section 202 based on one of the FFT timings #1 to #3 reported from FFT timing search section 203, and then performs FFT processing on the OFDM signals. Then, FFT section 211 inputs the OFDM signals after FFT processing to frame timing search section 212 and correlation value calculation section 213.

Frame timing search section 212 has a delay device that delays the OFDM signals by one symbol, monitors the correlation values between the outputs from this delay device and the OFDM signals inputted from FFT section 211, and determines the timing at which a peak appears in the correlation values as the start of the frame. Then, frame timing search section 212 reports the determination result to correlation value calculation section 213 and reception data generation section 231.

Furthermore, in this embodiment, an OFDM signal having the frame configuration shown in FIG.3 is inputted to frame timing search section 212 from FFT section 211, and therefore frame timing search section 212 detects the peak of the correlation values of one frame twice. Here, in this embodiment, frame timing search section 212 is set so as to determine the timing at which the correlation value peak is detected for the second time as the start of the frame.

Correlation value calculation section 213 calculates for each subband the correlation values between the subband IDs of cells A to D and the pilot signals (cell IDs) of the OFDM signals inputted from FFT section 211, and inputs for each subband the calculated correlation values of cells A to D to connecting destination determination section 221. Furthermore, correlation value calculation section 213 calculates in advance the average value of the pilot signals of N symbols, and calculates the correlation values using the calculated average value.

Connecting destination determination section 221 compares the correlation values of cells A to D inputted from correlation value calculation sections 213-1, 213-2 and 213-3 for each subband, identifies the subband ID having the highest correlation value in each subband, determines base station apparatus 100 corresponding to the identified subband ID as the connecting destination of that subband, and reports the determined base station apparatus 100 of each subband to access request signal generation section 222 and reception data generation section 231.

Access request signal generation section 222 generates for base station apparatus 100 reported for each subband from connecting destination determination section 221, an access request signal that requests the start of radio communication using an OFCDM scheme at the subband relating to the report, and inputs the generated access request signal of each subband to transmission RF section 223.

Transmission RF section 223 performs predetermined transmission processing on the access request signal inputted from access request signal generation section 222, and radio transmits via antenna element 201 the access request signal after transmission processing to base station apparatuses 100-A, 100-B and 100-C using RACH.

Reception data generation section 231, based on the timing of the start of the frame of each cell reported from frame timing search section 212, performs guard interval removal and FFT processing on the OFDM signals inputted from reception RF section 202. Subsequently, reception data generation section 231 extracts the subband of the OFDM signals after FFT processing which corresponds to base station apparatus 100 reported from connecting destination determination section 221 and generates reception data. Then, reception data generation section 231 inputs the generated reception data to a control section, or the like (not shown).

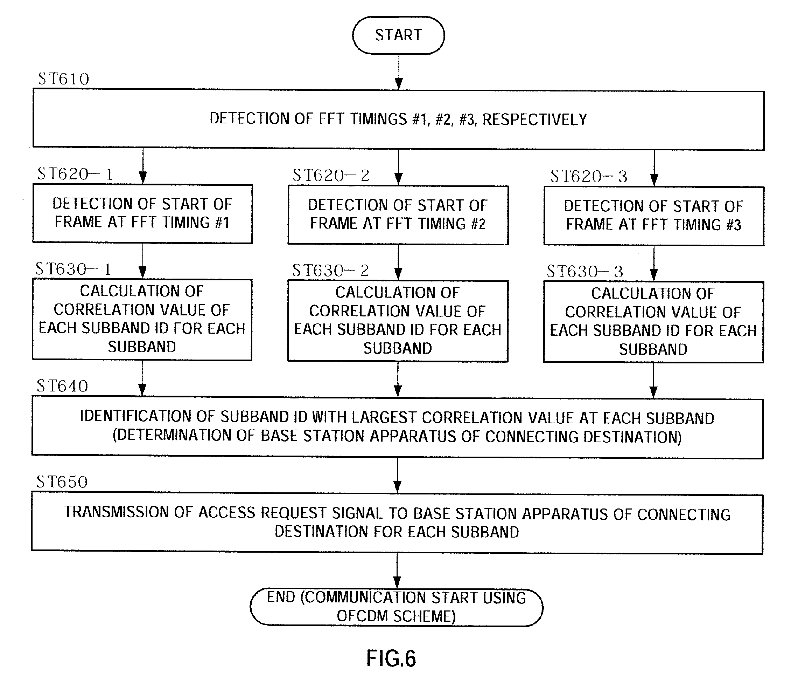

Next, the operation of communication terminal apparatus 200 according to this embodiment will be described with reference to FIG.6 to FIG.8.

FIG.6 is a flowchart illustrating a radio communication method according to this embodiment.

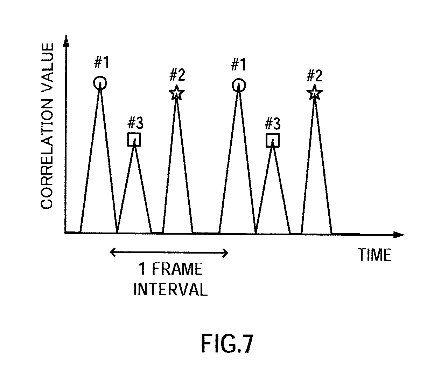

First, in step ST610, FFT timing search section 203 monitors the correlation values of the received OFDM signals and the delayed OFDM signals delayed by one frame, and detects the timings of the top three peaks of the correlation values. Here, FIG.7 shows the change in a time direction of the correlation values monitored by FFT timing search section 203 and the timings of the top three peaks of the correlation values.

Furthermore, in this embodiment, as shown in FIG. 7, the timing of the peak of the largest correlation value is set as FFT timing #1 (circle), the timing of the peak of the second largest correlation value is set as FFT timing #2 (star), and the timing of the peak of the third largest correlation value is set as FFT timing #3 (square). Further, communication terminal apparatus 200 is located at a point that varies in distance from each of base station apparatuses 100-A, 100-B and 100-C, as shown in FIG.1, and therefore, as shown in FIG.7, the three peaks detected in the correlation values are detected by FFT timing search section 203.

Subsequently, in step ST620-1, step ST620-2 and step ST620-3, frame timing search section 212-1, frame timing search section 212-2 and frame timing search section 212-3, respectively monitor the correlation values of the OFDM signals inputted from the corresponding FFT section 211 and the delayed OFDM signals delayed by one symbol, and detect the timing of the start of the frame of each cell. Furthermore, in this embodiment, the same pilot signal is transmitted for two symbols in succession as shown in FIG.3, and the correlation between data signals or between the pilot signal and data signal is low, and therefore frame timing search section 212 can accurately detect the timing of the start of the frame.

Subsequently, in step ST630-1, step ST630-2 and step ST630-3, correlation value calculation section 213-1, correlation value calculation section 213-2 and correlation calculation value section 213-3, respectively calculate the correlation values between the subbands of the OFDM signals inputted from the corresponding FFT section 211 and the subband IDs of cells A to D, and input all calculated correlation values to connecting destination determination section 221.

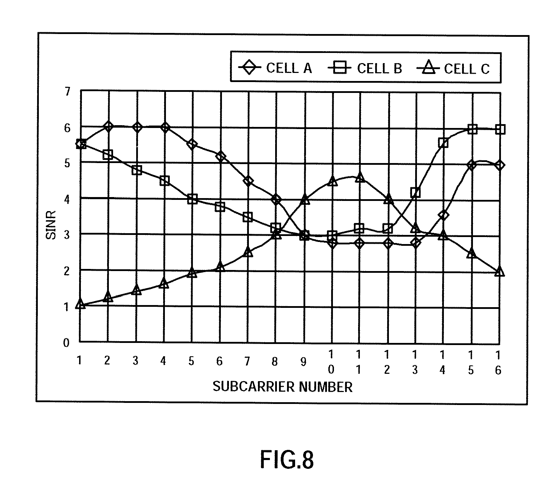

Here, FIG.8 shows the signal-to-interference noise ratio (SINR) for each subcarrier of the pilot signal received by communication terminal apparatus 200 in this embodiment classified based on cells A to C. Furthermore, in this embodiment, the reception quality for each subband of the pilot signal is determined based on the scale of the correlation value calculated in correlation value calculation section 213, but this correlation value is closely involved with and well corresponds to the SINR, and therefore the reception quality of the pilot signal may be determined, for example, based on such a SINR value for each subcarrier.

Further, when the SINR of the pilot signal received by communication terminal apparatus 200 is as shown in FIG.8, for the OFDM signals subjected to FFT processing at FFT timing #1 detected in step ST610, the correlation values calculated for each subband by correlation value calculation section 213-1 are shown in the following Table 2. Similarly, the correlation values calculated for each subband by correlation value calculation section 213-2 for the OFDM signals subjected to FFT processing at FFT timing #2 detected in step ST610, and the correlation values calculated for each subband by correlation value calculation section 213-3 for the OFDM signals subjected to FFT processing at FFT timing #3 detected in step ST610 are shown in Table 3 and Table 4, respectively.

Table 2

| FFT Timing #1 | | | | |
|---|---|---|---|---|
| Subband ID | Subband 1 | Subband 2 | Subband 3 | Subband 4 |
| 11-1-1 | 5.9 | 4.8 | 2.9 | 4.2 |
| 1-11-1 | 2.3 | 2.4 | 1 | 1.1 |
| 1111 | 1.2 | 1.1 | 1.2 | 1.3 |
| -111-1 | 0.3 | 0.2 | 0.1 | 0.3 |

Table 3

| FFT Timing #2 | | | | |
|---|---|---|---|---|
| Subband ID | Subband 1 | Subband 2 | Subband 3 | Subband 4 |
| 11-1-1 | 2.4 | 1 | 1.1 | 2.3 |

(continued)

| FFT Timing #2 | | | | |
|---|---|---|---|---|
| Subband ID | Subband 1 | Subband 2 | Subband 3 | Subband 4 |
| 1-11-1 | 5.0 | 3.6 | 3.1 | 5.5 |
| 1111 | 1.3 | 1.1 | 2.1 | 1.3 |
| -111-1 | 0.3 | 0.3 | 0.2 | 0.3 |

Table 4

| FFT Timing #3 | | | | |
|---|---|---|---|---|
| Subband ID | Subband 1 | Subband 2 | Subband 3 | Subband 4 |
| 11-1-1 | 1.1 | 2.1 | 1.3 | 2.4 |
| 1-11-1 | 1 | 1 | 1.1 | 2.3 |
| 1111 | 1.3 | 2.4 | 4.3 | 2.7 |
| -111-1 | 0.2 | 0.5 | 0.4 | 0.4 |

Subsequently, in step ST640, connecting destination determination section 221 identifies the subband ID having the largest correlation value for each subband among all correlation values inputted from correlation value calculation sections 213-1, 213-2 and 213-3, and determines base station apparatus 100 corresponding to the identified subband ID as the connecting destination of that subband.

Specifically, in step ST640, when the correlation values inputted to connecting destination determination section 221 are as shown in Table 2 to Table 4, connecting destination determination section 221 identifies subband ID "11-1-1" of Table 2 for subband 1, which shows the largest correlation value of 5.9, and determines base station apparatus 100-A corresponding to the identified subband ID "11-1-1" as the connecting destination of subband 1.

Similarly, connecting destination determination section 221 determines for subband 2 that base station apparatus 100-A corresponding to the subband ID "11-1-1" of Table 2, which shows the largest correlation value of 4.8, is the connecting destination of subband 2, and determines for subband 3 that base station apparatus 100-C corresponding to the subband ID "1111" of Table 4, which shows the largest correlation value of 4.3, is the connecting destination of subband 3, and determines for subband 4 that base station apparatus 100-B corresponding to the subband ID "1-11-1" of Table 3, which shows the largest correlation value of 5.5, is the connecting destination of subband 3. That is, when the correlation values inputted to connecting destination determination section 221 are as shown in Table 2 to Table 4, the subband IDs identified and the cells determined by connecting destination determination section 221 in step ST640 can be summarized as shown in the following Table 5.

Table 5

| Connecting destination Base Station Apparatuses 100-A to 100-C (Cells A to C) | | | | |
|---|---|---|---|---|
| | Subband 1 | Subband 2 | Subband 3 | Subband 4 |
| Cell ID | 11-1-1 | 11-1-1 | 1111 | 1-11-1 |
| Cell | Cell A | Cell A | Cell C | Cell B |

Next, in step ST650, access request signal generation section 222 generates the access request signal for base station apparatus 100 determined for each subband in step ST640, and transmission RF section 223 radio transmits via antenna element 201 the generated access request signal to base station apparatus 100 using RACH.

In this way, according to this embodiment, communication terminal apparatus 200 measures the reception quality for each subband of the received pilot signals, and transmits an access request signal to base station apparatus 100 that transmits the pilot signal having the highest reception quality in each subband according to the measurement result, so that it is possible to form a channel with base station apparatus 100 having the best propagation path state for each subband and effectively improve the throughput of the radio communication system.

Furthermore, the radio communication method, or the like, according to this embodiment may be modified and applied as follows.

In the radio communication method according to this embodiment, the case has been described where four subcarriers adjacent in a frequency direction form one subband, but the present invention is not limited to this, and, for example, any other number of subcarriers adjacent in the frequency direction may form one subband. Further, in this embodiment, a plurality of discrete subcarriers that are not adjacent in the frequency direction may form one subband.

Further, in this embodiment, the case has been described where communication terminal apparatus 200 has three channel determination sections 210, but the present invention is not limited to this, and, for example, communication terminal apparatus 200 may have the same number of channel determination sections 210 as the maximum number of cells (base station apparatuses 100) that can be connected simultaneously.

Further, in this embodiment, the case has been described where communication terminal apparatus 200 calculates for each symbol the correlation value using a delay signal in correlation value calculation section 213 as the reception quality of the received pilot signal, but the present invention is not limited to this, and, for example, communication terminal apparatus 200 may measure the reception power and signal-to-interface power ratio (SIR) as the reception quality. According to this, communication terminal apparatus 200 is capable of readily measuring the reception quality of the pilot signal.

Further, in this embodiment, the case has been described where FFT timing search section 203 determines the top three peaks of the correlation values of the OFDM signals inputted from reception RF section 202 and the delayed OFDM signal as FFT timings, but the present invention is not limited to this, and, for example, FFT timing search section 203 may determine the peaks having a correlation value greater than or equal to a predetermined threshold value as FFT timings in the order of being detected.

Further, in this embodiment, the case has been described where base station apparatus 100 and communication terminal apparatus 200 perform radio communication using an OFCDM/FDD scheme, but the present invention is not limited to this, and, for example, base station apparatus 100 and communication terminal apparatus 200 may perform radio communication using an OFDM/FDD scheme.

Further, in this embodiment, the case has been described where communication terminal apparatus 200 radio transmits an access request signal to base station apparatus 100 using RACH, but RACH may be configured with a single carrier. Furthermore, in this embodiment, the uplink from communication terminal apparatus 200 to base station apparatus 100 may be configured with a single carrier and may be subjected to code-division multiple access (CDMA).

(Embodiment 2)

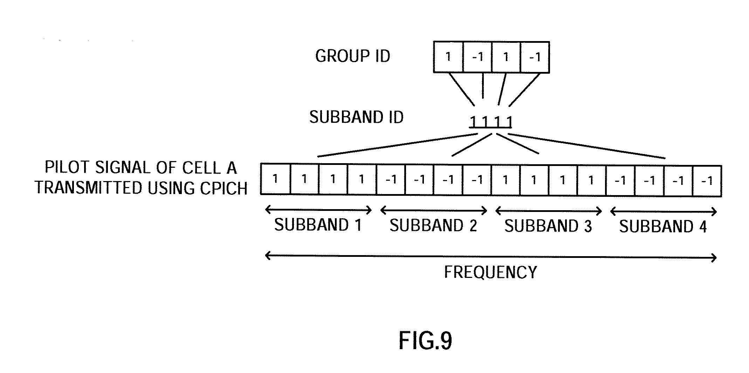

FIG.9 shows the configuration of the pilot signal (cell ID) of cell A transmitted using CPICH according to Embodiment 2 of the present invention. In this embodiment, cell IDs are generated by integrating four types of group IDs comprised of orthogonal code sequences of four bits with the four types of subband IDs described in Embodiment 1. Here, generation of the cell IDs shown in FIG.9 will be specifically described using the following multiplication formulas, or the like.

$$C = [C_1, C_2, C_3, C_4,] \quad \ldots (\text{Cell ID})$$

$$C_i = G_i \times S \ [i = 1 \ \text{to} \ 4]$$

$$G = [G_1, G_2, G_3, G_4,] = [1111] \quad \ldots (\text{Group ID})$$

$$S = [1111] \quad \ldots (\text{Sub-band ID})$$

An example of the cell IDs of cells A to C generated using the above multiplication formulas, or the like, is shown in the following Table 6.

Table 6

| Cell | Group ID | Subband ID | Cell ID |
|---|---|---|---|
| A | 1-11-1 | 1111 | 1111 -1-1-1-1 1111 -1-1-1-1 |
| B | 1-11-1 | 11-1-1 | 11-1-1 -1-111 11-1-1 -1-111 |
| C | -1-111 | 1111 | -1-1-1-1 -1-1-1-1 1111 1111 |

Furthermore, in this embodiment, cell IDs are generated by integrating four types of group IDs with four types of subband IDs, and therefore sixteen types of cell IDs exist. By comparison, the cell ID of Embodiment 1 is the cell ID generated when the group ID is "1111" in this embodiment.

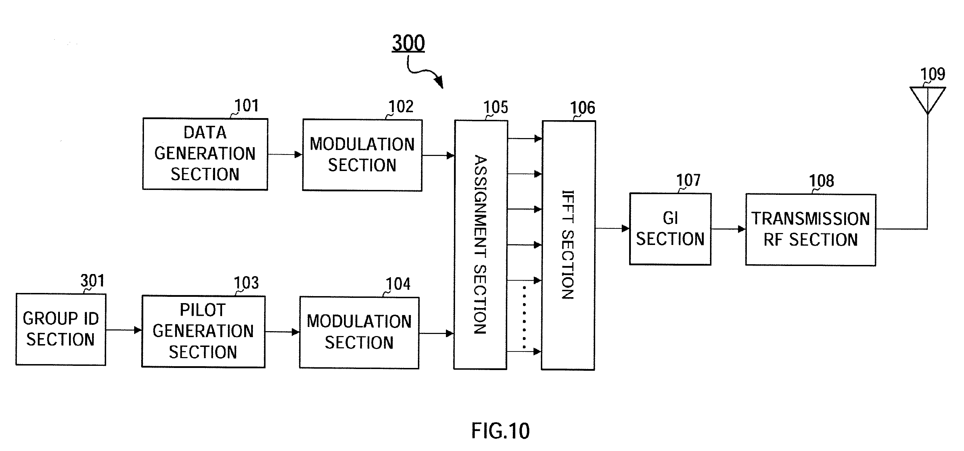

FIG.10 is a block diagram showing the main configuration of base station apparatus 300 of this embodiment. Base station apparatus 300 has the same configuration as base station apparatus 100 described in Embodiment 1, with group ID section 301 newly added. In this embodiment, to avoid duplication with Embodiment 1, base station apparatus 300 is described by focusing on those points that differ from base station apparatus 100 only.

Group ID section 301 reports to pilot generation section 103 the group ID comprised of an orthogonal code sequence of four bits assigned in advance to the group to which base station apparatus 300 belongs. Pilot generation section 103 which receives this report generates a cell ID unique to base station apparatus 300 using the above-described multiplication formulas, or the like, and inputs a pilot signal comprised of the cell ID to modulation section 104.

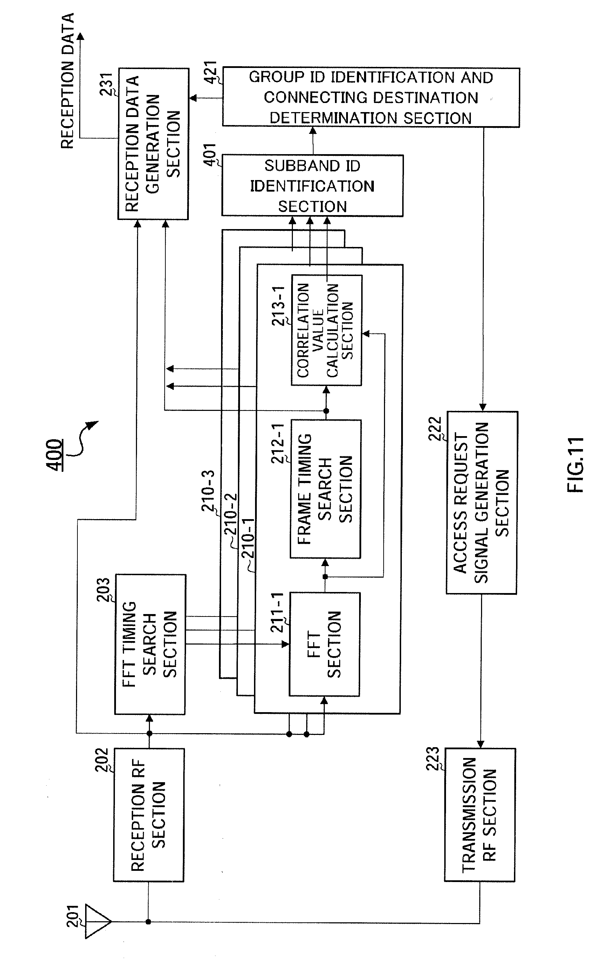

FIG.11 is a block diagram showing the main configuration of communication terminal apparatus 400 according to this embodiment. Communication terminal apparatus 400 has the same configuration as communication terminal apparatus 200, with group ID identification and connecting destination determination section 421 in place of connecting destination determination section 221, and subband ID identification section 401 newly added. For communication terminal apparatus 400 as well, to avoid duplication with Embodiment 1, only those points that differ from communication terminal apparatus 200 will be described.

Subband ID identification section 401 compares the absolute values of the correlation values for each subband of cells A to D inputted from correlation value calculation sections 213-1, 213-2 and 213-3, and identifies the subband ID having the highest correlation value in each subband. Here, subband ID identification section 401 uses the absolute values of the correlation values as standard due to the implicit influence of the group ID on the correlation value. Then, subband ID identification section 401 reports the identified subband ID to group ID identification and connecting destination determination section 421, and also inputs the correlation value calculated based on the identified subband ID to group ID identification and connecting destination determination section 421.

Group ID identification and connecting destination determination section 421 calculates the correlation values between the correlation value based on the identified subband ID inputted from subband ID identification section 401 and the four types of group IDs, and identifies the group ID having the largest calculated correlation value. Then, group ID identification and connecting destination determination section 421 determines for each subband base station apparatus 300 which is to be the connecting destination based on the identified group ID and the subband ID reported from subband ID identification section 401.

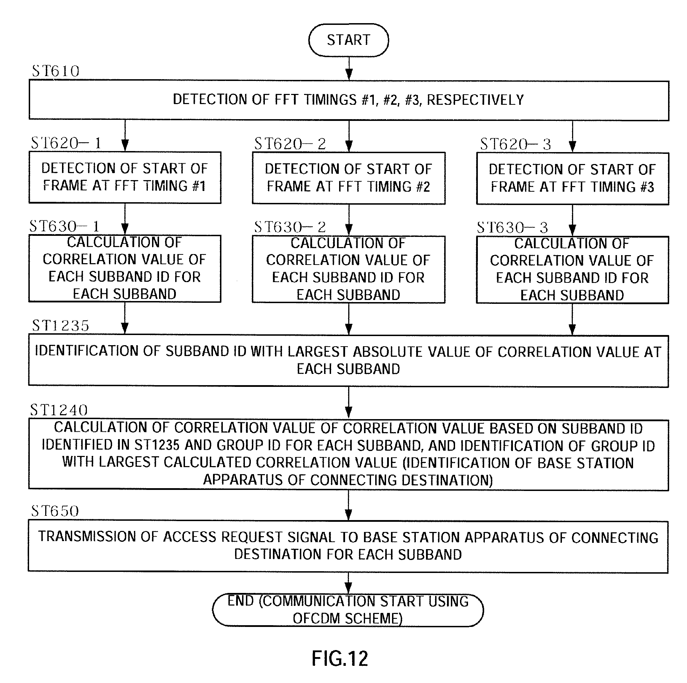

Next, the operation of communication terminal apparatus 400 will be described with reference to FIG. 12.

FIG.12 is a flowchart illustrating a radio communication method according to this embodiment. As is clear from FIG.12, the radio communication method according to this embodiment is the same method as the radio communication method according to Embodiment 1, with step ST1235 and step ST1240 in place of step ST640. Therefore, in order to avoid duplication with Embodiment 1, the radio communication method according to this embodiment will also be described by focusing on the points that differ from the radio communication method of Embodiment 1 only.

In step ST1235, subband ID identification section 401 compares the absolute values of the correlation values for each subband of cells A to D inputted from correlation value calculation section 213, and identifies the subband ID having the highest correlation value in each subband. Here, the following Table 7 shows the correlation values calculated using the subband ID identified by subband ID identification section 401, that is, the form of the correlation values inputted to group ID identification and connecting destination determination section 421 by subband ID identification section 401, in a case where the SINR for each subcarrier of the pilot signal received by communication terminal apparatus 400 is as shown in FIG.8.

Table 7

|  | Subband 1 | Subband 2 | Subband 3 | Subband 4 |
|---|---|---|---|---|
| $C_1$ | 5.9 | -4.8 | 4.3 | -5.5 |
| $C_2$ | -5.9 | 4.8 | 4.3 | 5.5 |
| $C_3$ | 5.9 | -4.8 | -4.3 | -5.5 |
| $C_4$ | -5.9 | 4.8 | -4.3 | 5.5 |

Subsequently, in step ST1240, group ID identification and connecting destination determination section 421 determines for each subband base station apparatus 300 that is to be the connecting destination by calculating the correlation values between the correlation value from subband ID identification section 401 and all group IDs and identifying the group ID having the largest calculated correlation value.

In this way, according to this embodiment, cell IDs are generated by integrating the group IDs and subband IDs, so that it is possible to increase the number of cell ID types exponentially. Thus, according to this embodiment, in addition to the effect achieved by Embodiment 1, the number of base station apparatuses 300 with which communication terminal apparatus 400 can perform simultaneous communication effectively increases, so that it is possible to further improve the throughput of the radio communication system.

Furthermore, the radio communication method, or the like, according to this embodiment may be modified and applied as follows.

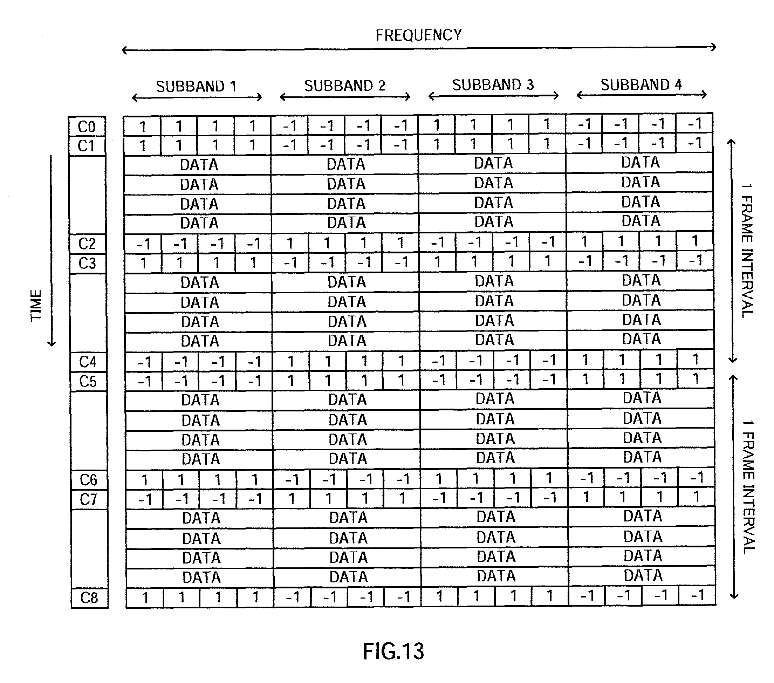

With the radio communication method according to this embodiment, the case has been described where, similar to Embodiment 1, the configuration shown in FIG.3 is used as the frame configuration of the OFDM signal received by communication terminal apparatus 400, but the present invention is not limited to this, and, for example, the frame configuration may be a configuration such as that shown in FIG.13. Here, the characteristic of the frame configuration of the OFDM signal shown in FIG.13 is that the subbands shift in sequence when the subbands of the pilot signal of one frame are viewed in time series.

Specifically, when times C1 to C4 are taken as one frame and the configuration of the pilot signal transmitted at the timing of time C1 is used as standard, the pilot signal transmitted at time C2 has a configuration where subbands 1 to 4 of the pilot signal of time C1 shift one by one. That is, the configuration of the pilot signal transmitted at time C2 "subband 1 of time C2, subband 2 of time C2, subband 3 of time C2, subband 4 of time C2" changes to "subband 4 of time C1, subband 1 of time C1, subband 2 of time C1, subband 3 of time C1".

Similarly, the configuration of the pilot signal transmitted at time C3 is one where the configuration of the pilot signal transmitted at time C2 further shifts one by one in units of subbands, and the configuration of the pilot signal transmitted at time C4 is one where the configuration of the pilot signal transmitted at time C3 shifts one by one in units of subbands. Then, the configuration of the pilot signal transmitted at first symbol transmission timing time C5 of a new frame is the same as that of the pilot signal transmitted at time C4.

Therefore, when the frame configuration of the OFDM signal is designed in this way, the timing at which correlation value calculation section 213 detects the peak of the correlation values between symbols is automatically the timing of the start of the frame, so that it is possible to detect the timing of the start of the frame more readily and more accurately.

Furthermore, each function block used to explain the above-described embodiments is typically implemented as an LSI constituted by an integrated circuit. These may be individual chips or may partially or totally contained on a single chip.

Here, each function block is described as an LSI, but this may also be referred to as "IC", "system LSI", "super LSI", "ultra LSI" depending on differing extents of integration.

Further, the method of circuit integration is not limited to LSI's, and implementation using dedicated circuitry or general purpose processors is also possible. After LSI manufacture, utilization of a programmable FPGA (Field Programmable Gate Array) or a reconfigurable processor in which connections and settings of circuit cells within an LSI can be reconfigured is also possible.

Further, if integrated circuit technology comes out to replace LSI's as a result of the development of semiconductor technology or a derivative other technology, it is naturally also possible to carry out function block integration using this technology. Application in biotechnology is also possible.

The present application is based on Japanese Patent Application No.2004-371745, filed on December 22, 2004,the entire content of which is expressly incorporated herein by reference.

Industrial Applicability

The radio communication method according to the present invention has the advantage of reducing the error rate of the entire frequency band and improving the communication rate even under an environment where the propagation path characteristics differ for each frequency band of an OFDM signal, and is effective for use in a next generation radio communication system that performs multicast transmission, or the like, requiring a downlink channel with high speed and large capacity, and for a communication terminal apparatus or the like, that configures the system.

**Claims**

1.  A radio communication method that simultaneously receives OFDM signals at a communication terminal apparatus from a plurality of base station apparatuses, the radio communication method comprising:

    a reception step of receiving pilot signals transmitted from the base station apparatuses at the communication terminal apparatus;
    a measurement step of measuring for each subband a reception quality of each received pilot signal at the communication terminal apparatus;
    a determination step of determining for each subband a base station apparatus that transmits a pilot signal having the best reception quality measurement result; and
    an access request step of transmitting to the base station apparatus determined for each subband an access request signal that requests communication start at the subband relating to the determination.

2.  The radio communication method according to claim 1, wherein the pilot signal is comprised of a unique orthogonal code sequence for each base station apparatus.

3.  The radio communication method according to claim 2, wherein the pilot signal is an integration result of the orthogonal code sequence assigned to each base station apparatus and the orthogonal code sequence assigned to a group to which the base station apparatus belongs.

4.  A communication terminal apparatus that simultaneously receives OFDM signals from a plurality of base station apparatuses, the communication terminal apparatus comprising:

    a reception section that receives pilot signals transmitted from the base station apparatuses;
    a measurement section that measures for each subband a reception quality of each received pilot signal;
    a determination section that determines for each subband a base station apparatus that transmits a pilot signal having the best reception quality measurement result; and
    a transmission section that transmits to the base station apparatus determined for each subband an access request signal that requests communication start at the subband relating to the determination.

5.  A radio communication system comprising a communication terminal apparatus and a plurality of base station apparatuses, wherein:

    the base station apparatuses comprise:

    a pilot generation section that generates unique pilot signals indicating the base stations; and
    a base station side transmission section that transmits the generated pilot signals as OFDM signals; and
    the communication terminal apparatus comprises:

    a reception section that receives the pilot signals transmitted from the plurality of base station apparatuses;
    a measurement section that measures for each subband a reception quality of each received pilot signal;
    a determination section that determines for each subband a base station apparatus that transmits a pilot signal having the best reception quality measurement result; and
    a terminal side transmission section that transmits to the base station apparatus determined for each subband an access request signal that requests communication start at the subband relating to the determination.

FIG.1

EP 1 806 861 A1

PILOT SIGNAL OF CELL A
TRANSMITTED USING CPICH

| 1 | 1 | -1 | -1 | 1 | 1 | -1 | -1 | 1 | 1 | -1 | -1 | 1 | 1 | -1 | -1 |

SUBBAND 1   SUBBAND 2   SUBBAND 3   SUBBAND 4

FREQUENCY

FIG.2

EP 1 806 861 A1

| SUBBAND 1 | | | | SUBBAND 2 | | | | SUBBAND 3 | | | | SUBBAND 4 | | | |
|---|---|---|---|---|---|---|---|---|---|---|---|---|---|---|---|
| 1 | 1 | -1 | -1 | 1 | 1 | -1 | -1 | 1 | 1 | -1 | -1 | 1 | 1 | -1 | -1 |
| DATA | | | | DATA | | | | DATA | | | | DATA | | | |
| DATA | | | | DATA | | | | DATA | | | | DATA | | | |
| DATA | | | | DATA | | | | DATA | | | | DATA | | | |
| DATA | | | | DATA | | | | DATA | | | | DATA | | | |
| 1 | 1 | -1 | -1 | 1 | 1 | -1 | -1 | 1 | 1 | -1 | -1 | 1 | 1 | -1 | -1 |
| 1 | 1 | -1 | -1 | 1 | 1 | -1 | -1 | 1 | 1 | -1 | -1 | 1 | 1 | -1 | -1 |
| DATA | | | | DATA | | | | DATA | | | | DATA | | | |
| DATA | | | | DATA | | | | DATA | | | | DATA | | | |
| DATA | | | | DATA | | | | DATA | | | | DATA | | | |
| DATA | | | | DATA | | | | DATA | | | | DATA | | | |
| 1 | 1 | -1 | -1 | 1 | 1 | -1 | -1 | 1 | 1 | -1 | -1 | 1 | 1 | -1 | -1 |
| 1 | 1 | -1 | -1 | 1 | 1 | -1 | -1 | 1 | 1 | -1 | -1 | 1 | 1 | -1 | -1 |
| DATA | | | | DATA | | | | DATA | | | | DATA | | | |
| DATA | | | | DATA | | | | DATA | | | | DATA | | | |
| DATA | | | | DATA | | | | DATA | | | | DATA | | | |
| DATA | | | | DATA | | | | DATA | | | | DATA | | | |
| 1 | 1 | -1 | -1 | 1 | 1 | -1 | -1 | 1 | 1 | -1 | -1 | 1 | 1 | -1 | -1 |
| 1 | 1 | -1 | -1 | 1 | 1 | -1 | -1 | 1 | 1 | -1 | -1 | 1 | 1 | -1 | -1 |
| DATA | | | | DATA | | | | DATA | | | | DATA | | | |
| DATA | | | | DATA | | | | DATA | | | | DATA | | | |
| DATA | | | | DATA | | | | DATA | | | | DATA | | | |
| DATA | | | | DATA | | | | DATA | | | | DATA | | | |

TIME

1 FRAME INTERVAL

FIG.3

EP 1 806 861 A1

EP 1 806 861 A1

**FIG.4**

FIG.5

START

EP 1 806 861 A1

ST610

DETECTION OF FFT TIMINGS #1, #2, #3, RESPECTIVELY

ST620-1

DETECTION OF START OF FRAME AT FFT TIMING #1

ST620-2

DETECTION OF START OF FRAME AT FFT TIMING #2

ST620-3

DETECTION OF START OF FRAME AT FFT TIMING #3

ST630-1

CALCULATION OF CORRELATION VALUE OF EACH SUBBAND ID FOR EACH SUBBAND

ST630-2

CALCULATION OF CORRELATION VALUE OF EACH SUBBAND ID FOR EACH SUBBAND

ST630-3

CALCULATION OF CORRELATION VALUE OF EACH SUBBAND ID FOR EACH SUBBAND

ST640

IDENTIFICATION OF SUBBAND ID WITH LARGEST CORRELATION VALUE AT EACH SUBBAND (DETERMINATION OF BASE STATION APPARATUS OF CONNECTING DESTINATION)

ST650

TRANSMISSION OF ACCESS REQUEST SIGNAL TO BASE STATION APPARATUS OF CONNECTING DESTINATION FOR EACH SUBBAND

END (COMMUNICATION START USING OFCDM SCHEME)

FIG.6

FIG.7

FIG.8

GROUP ID

| 1 | -1 | 1 | -1 |

SUBBAND ID

1 1 1 1

PILOT SIGNAL OF CELL A
TRANSMITTED USING CPICH

| 1 | 1 | 1 | 1 | -1 | -1 | -1 | -1 | 1 | 1 | 1 | 1 | -1 | -1 | -1 | -1 |

SUBBAND 1   SUBBAND 2   SUBBAND 3   SUBBAND 4

FREQUENCY

FIG.9

FIG.10

FIG.11

RECEPTION DATA

231 RECEPTION DATA GENERATION SECTION

421 GROUP ID IDENTIFICATION AND CONNECTING DESTINATION DETERMINATION SECTION

401 SUBBAND ID IDENTIFICATION SECTION

213-1 CORRELATION VALUE CALCULATION SECTION

212-1 FRAME TIMING SEARCH SECTION

211-1 FFT SECTION

210-1
210-2
210-3

203 FFT TIMING SEARCH SECTION

202 RECEPTION RF SECTION

201

222 ACCESS REQUEST SIGNAL GENERATION SECTION

223 TRANSMISSION RF SECTION

400

START

ST610

DETECTION OF FFT TIMINGS #1, #2, #3, RESPECTIVELY

ST620—1
DETECTION OF START OF FRAME AT FFT TIMING #1

ST620—2
DETECTION OF START OF FRAME AT FFT TIMING #2

ST620—3
DETECTION OF START OF FRAME AT FFT TIMING #3

ST630—1
CALCULATION OF CORRELATION VALUE OF EACH SUBBAND ID FOR EACH SUBBAND

ST630—2
CALCULATION OF CORRELATION VALUE OF EACH SUBBAND ID FOR EACH SUBBAND

ST630—3
CALCULATION OF CORRELATION VALUE OF EACH SUBBAND ID FOR EACH SUBBAND

ST1235
IDENTIFICATION OF SUBBAND ID WITH LARGEST ABSOLUTE VALUE OF CORRELATION VALUE AT EACH SUBBAND

ST1240
CALCULATION OF CORRELATION VALUE OF CORRELATION VALUE BASED ON SUBBAND ID IDENTIFIED IN ST1235 AND GROUP ID FOR EACH SUBBAND, AND IDENTIFICATION OF GROUP ID WITH LARGEST CALCULATED CORRELATION VALUE (IDENTIFICATION OF BASE STATION APPARATUS OF CONNECTING DESTINATION)

ST650
TRANSMISSION OF ACCESS REQUEST SIGNAL TO BASE STATION APPARATUS OF CONNECTING DESTINATION FOR EACH SUBBAND

END (COMMUNICATION START USING OFCDM SCHEME)

FIG.12

FIG.13

<table>
<tr><td colspan="3" align="center">**INTERNATIONAL SEARCH REPORT**</td><td>International application No.<br>PCT/JP2005/023029</td></tr>
</table>

A. CLASSIFICATION OF SUBJECT MATTER
*H04J11/00*(2006.01), *H04Q7/34*(2006.01)

According to International Patent Classification (IPC) or to both national classification and IPC

B. FIELDS SEARCHED

Minimum documentation searched (classification system followed by classification symbols)
H04J11/00, H04Q7/34

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2002-335557 A  (Sony Corp.),<br>22 November, 2002 (22.11.02),<br>Par. Nos. [0059] to [0077]; Fig. 13<br>(Family: none) | 1-5 |
| A | JP 2005-142935 A  (Toshiba Corp.),<br>02 June, 2005 (02.06.05),<br>Par. Nos. [0037] to [0046]; Fig. 1<br>(Family: none) | 1-5 |
| A | JP 2004-194288 A  (Sony Corp.),<br>08 July, 2004 (08.07.04),<br>Par. No. [0089]<br>& US 2004/0157614 A1 | 2 |

☒ Further documents are listed in the continuation of Box C.        ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    19 January, 2006 (19.01.06) | Date of mailing of the international search report<br>    31 January, 2006 (31.01.06) |
|---|---|
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2005/023029

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2004-48716 A (NTT Docomo Inc.), 12 February, 2004 (12.02.04), Par. Nos. [0068] to [0069]; Fig. 4 & US 2003/0214927 A1 & EP 1363434 A2 & CN 1461121 A & CA 2428576 A1 | 3 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004371745 A

**Non-patent literature cited in the description**

- **MOTOHIRO TANNO ; HIROYUKI ATARASHI ; KENICHI HIGUCHI ; MAMORU SAWAHASHI.** Characteristics of Three-Stage High-Speed Cell Search Method Based on Common Pilot Channel in Reverse Link Broadband OFCDM. *Technical Report of the Institute of Electronics Information and Communication Engineers of Japan, RCS2002-135,* July 2002